# EUROPEAN PATENT SPECIFICATION

(11) **EP 1 317 359 B1**
(45) Date of publication and mention of the grant of the patent: **31.08.2011**
(21) Application number: 01971400.5
(22) Date of filing: 07.09.2001
(51) Int. Cl.: B60W 30/16

(54) **Active brake control system and adaptive cruise control integration.**
Integration von aktiver Bremsregelung und adaptiver Geschwindigkeitsregelung.
Système de régulation active des freins et intégration d'un régulateur de vitesse adaptif.

(30) Priority: 09.09.2000 US 659027
(43) Date of publication of application: 11.06.2003
(73) Proprietor: KELSEY-HAYES COMPANY, Livonia, MI 48150 (US)
(72) Inventor: MILOT, Danny, R., Ann Arbor, MI 48105 (US); BARRON, Richard, J., Ann Arbor, MI 48105 (US)
(74) Representative: Beyer, Andreas
(86) International application number: PCT/US2001/042054
(87) International publication number: WO 2002/020296

(56) References cited:
- EP-A- 0 720 928
- EP-A- 0 896 896
- EP-A- 0 965 477
- EP-A- 1 020 315
- EP-A- 1 070 624
- EP-A- 1 127 728
- US-A- 5 969 640

## Description

### BACKGROUND OF THE INVENTION

The present invention relates in general to controlling the following headway of a vehicle using adaptive cruise control, and more specifically to a vehicular control system that monitors the occurrence of brake activation events in an active brake control system and modifies the performance of the adaptive cruise control in response to the events.

Electronically-controlled vehicular braking systems can include anti-lock braking (ABS), traction control (TC), and vehicle stability control (VSC) functions. In ABS and TC, for example, wheel sensors monitor individual wheel speeds and detect wheel slip when a wheel speed differs from the speed of the vehicle. In response to the wheel slip, electrically activated devices apply, hold, and dump (relieve) pressure at wheel brakes of a vehicle in order to modulate brake action and reduce the slip.

Adaptive cruise control (ACC) operates a vehicle at a set speed provided there is no interfering vehicle in the vehicle's path. ACC uses remote sensing, such as radar, to identify and track an interfering vehicle and to operate the vehicle at a lower speed to maintain a predetermined separation, or headway, between vehicles until the interfering vehicle is gone. The desired headway is usually adjustable by the user and is selected in terms of following time (following distance divided by vehicle speed). The ACC sends a braking command to the braking system in order to slow the vehicle if headway becomes too small and sends a drive command to the engine control unit in order to speed up the vehicle if headway becomes too large.

In typical ACC systems, deceleration and acceleration corresponding to the braking and drive commands are limited such that the ACC system can only make moderate adjustments in the vehicle speed (e. g., it cannot make a panic stop). The limits for deceleration and acceleration commands assume that normal, dry pavement conditions exist. If slippery condition exist, then the commands may cause wheel slip causing the ABS or TC systems to activate to automatically reduce the wheel slip (just as they would if ACC was not present).

EP 0 965 477 A2, taken as the closest prior art, relates to a method of regulating a cruise control system, wherein a control function to perform a follow-up operation on preceding vehicle is inhibited when a predetermined coefficient of friction on the road surface is detected.

EP 1 020 315 A1 discloses a method of regulating a cruise control system, wherein a follow-up run control is released after a predetermined interval of time at which a braking control activated by a vehicle run controlling section is ended or after a braking pressure is gradually reduced during the braking control.

EP 0 896 896 A2 describes a cruise control system having a constant speed running control function and a following-behind control function. During running at the following-behind running mode operation of the cruise control system is stopped by a braking operation. If the brake pressure is lower than a specified value and if the vehicle speed is higher than a lower limit vehicle speed the operation of the cruise control system is restored.

### SUMMARY OF THE INVENTION

The present invention has the advantage that the occurrence of a wheel slip event is used to modify ACC operation so that the risk of additional occurrences of wheel slip are greatly reduced.

In a preferred embodiment according to independent system claim 1 and method claim 18 a vehicle control system includes an adaptive cruise control (ACC) adapted to control the speed of a vehicle along a path while maintaining a predetermined following headway from another vehicle traveling ahead of the vehicle in the path. The ACC commands acceleration and braking independently of a driver of the vehicle to maintain the predetermined following headway. A braking control system is operable in at least one of a plurality of operating states including anti-lock brake control, traction control and yaw stability control. The at least one operating state includes a brake activation event wherein the anti-lock brake control, traction control, or yaw stability control exercise active control of braking. The ACC and the braking control system exchange signals therebetween. The ACC adopts a modification of the following of the other vehicle in response to the event.

Various objects and advantages of this invention will become apparent to those skilled in the art from the following detailed description of the preferred embodiment, when read in light of the accompanying drawings.

### BRIEF DESCRIPTION OF THE DRAWINGS

Figure 1 is a schematic diagram of an integrated vehicular braking and ACC system according to the present invention.
Figure 2 is a plot showing actual headway during ACC operation as compared to a desired headway.
Figure 3 is a plot showing command signals generated by the ACC in order to maintain the desired headway.
Figure 4 is a block diagram showing the integrated system of the present invention in greater detail.
Figure 5 is a plot showing a preferred relationship between a severity of slip (as indicated by the deficiency in acceleration or deceleration achieved during a slip event) and the amount of headway to be added.

### DETAILED DESCRIPTION OF THE PREFERRED EMBODIMENTS

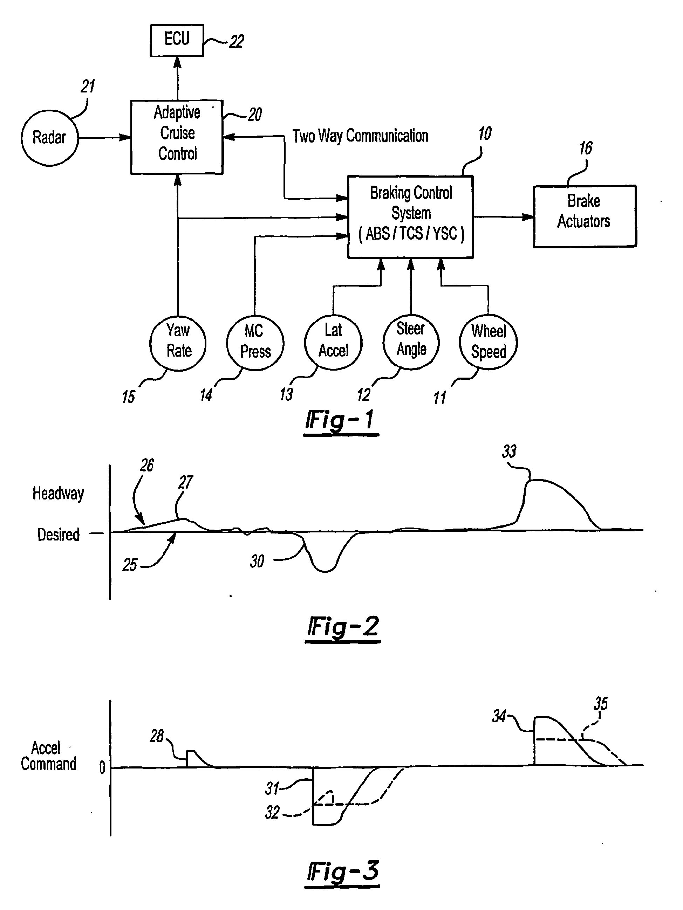

A first embodiment of a vehicular control system according to the present invention is indicated generally in Figure 1. The control system is particularly adapted to control fluid pressure in an electronically-controlled vehicular braking system and an electronically-controlled ACC system. A braking control system 10 can include selected ones of anti-lock braking (ABS), traction control (TC), or yaw stability control (YSC) functions or can be a vehicle stability control (VSC) system, which is a combination of all three. Braking control relies on input signals from a wheel speed sensor 11, a steering angle sensor 12, a lateral acceleration sensor 13, a master cylinder pressure sensor 14, and a yaw rate sensor 15. Wheel slip is detected in a conventional manner and electronically actuated brakes 16 (e.g., including an electronic booster) are activated to control the amount of slip.

Braking control system 10 has two-way communication with an adaptive cruise control 20 which uses a conventional radar sensor 21 to determine range and relative speed of a vehicle traveling ahead in the vehicle's path. ACC 20 is connected to an engine control unit (ECU) 22 for sending drive commands requesting an increase in engine torque to accelerate the vehicle as needed to maintain a predetermined headway from the preceding vehicle. ACC 20 is also connected to yaw rate sensor 15 which helps it to track the preceding vehicle while traversing curves.

The prior art ACC system assumes that relatively good driving conditions exist during system operation (i.e., high surface coefficient of friction). ABS and TC generally only activate during conditions of wheel instability (i.e., excessive wheel slip due to braking or accelerating beyond the limit of the surface). YSC activates when it is determined that the vehicle is not following the intended trajectory during a turning maneuver. If ABS, TC or YSC activates during ACC operation, then communication between the two systems (ACC - VSC) is required to either deactivate or significantly modify the operation of the ACC system.

ACC is designed to decelerate the vehicle up to a maximum of 3 m/sec² (about 0.3g) and accelerate the vehicle up to approximately 2 m/sec² (about 0.2g) in order to properly control the vehicle spacing. In the event the ACC is operational while the vehicle is traversing adverse road conditions, the ABS and TC systems may provide assistance with vehicle stability. If either the ABS or TC system activates because of an actuation command from the ACC system, then the ACC system is notified to reduced its current acceleration request or modify its headway distance command for safer driving distances. If ABS activity is enabled during an ACC braking event, then the ACC system must maintain its braking command to control the vehicle spacing, however, the desired headway distance is modified to maintain safer spacing for the given road conditions. Alternatively, the invention may instead cause deactivation of ACC, but not until the end of the current braking operation.

In the event that ACC is enabled and YSC activates during a turning maneuver, then the yaw rate sensor should indicate that a corresponding correction in oversteer or understeer was achieved. If no such correction is evident, then a road surface with an insufficient coefficient of friction is present. For purposes of the present invention, this situation is considered to be a brake activation event or slip event.

Basic ACC operation will be described with reference to Figures 2 and 3. In Figure 2, a desired headway 25 provides a control target at which the ACC system attempts to maintain intervehicle separation as long as the preceding vehicle is traveling at a speed equal to or below the cruising speed set by the user of the ACC system. An actual headway 26 tracks desired headway 25 in accordance with a headway control algorithm using closed loop control (e.g., proportional-integral-derivative (PID) control). With changes in the speed of the preceding vehicle or roadway slope, actual headway 26 begins to diverge from desired headway 25. Thus, at a point 27, the actual headway has increased to a point where the difference from the desired headway is greater than a control limit of the control algorithm and action is taken to accelerate the vehicle and reduce the actual headway. Figure 3 shows acceleration command signals sent from the ACC system to the engine control unit and/or the braking control system. Coincident with point 27, a drive command signal 28 is generated to request the application of drive torque by the engine control unit. Preferably, drive command signal 28 initially has a peak value and then decays in a manner that avoids overshoot of the desired headway.

At another point 30 in the driving sequence shown in Figure 2, a more sudden reduction in actual headway causes a braking command signal 31 with a correspondingly greater magnitude. If the road surface conditions cannot support the desired braking torque, however, wheel slip occurs and a reduced amount of braking torque 32 is actually achieved and must be maintained for a longer time in order to restore the desired headway.

Slip can also occur during an ACC vehicle acceleration. A lane change or the exiting of the preceding vehicle from a highway can permit rapid acceleration of the vehicle to the operator's set speed (at least until another interfering vehicle is encountered). Thus, at point 33 in Figure 2, a sudden increase in actual headway is detected and a drive command signal 34 is generated. The attempted acceleration can exceed that achievable with the instantaneous road conditions so that only a reduced acceleration torque 35 is obtained. In a vehicle equipped with traction control, this additional instance of wheel slip is detected and corrected (e.g., by decreasing engine torque and/or application of braking).

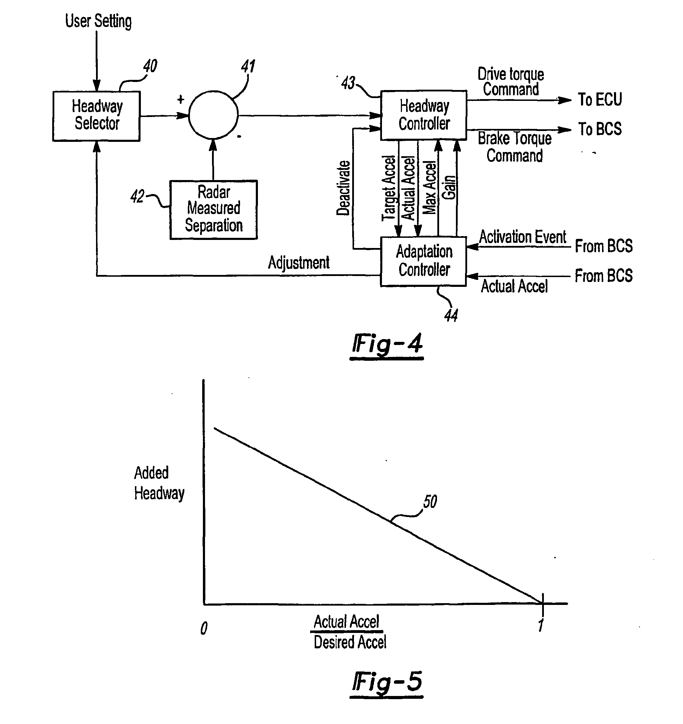

The integrated ACC and braking control system is shown in greater detail in Figure 4. A headway selector 40 receives a user input setting of a desired headway in terms of following time. The user setting is typically entered using an electronic switch. The desired headway (as adjusted by the present invention in a manner described below) is provided to one input of a summer 41. A radar-measured separation 42 corresponding to the actual headway is provided to an inverted input of summer 41. The difference between desired headway and actual headway generated at the output of summer 41 is provided to a headway controller 43 as an error to be reduced using closed-loop control.

Headway controller 43 uses a known algorithm to generate a drive torque command which is sent to the engine control unit and a brake torque command which is sent to the brake control system. The known algorithm is modified according to the present invention as shown by an adaptation controller 44 coupled to headway controller 43 and headway selector 40.

Adaptation controller 44 receives an "activation event" signal from the brake control system during any time that wheel slip is detected and brake actuation is being modulated to reduce the wheel slip (or a YSC activation is failing to achieve the expected change in yaw rate). The activation event signal can, for example, be a digital logic signal with a high logic level during brake modulation and a low logic level otherwise. Four alternative embodiments will be disclosed of modifications made in the following of a preceding vehicle that can be initiated by adaptation controller 44 in response to an activation event. In all preferred embodiments, however, no action is taken unless an activation event lasts for a predetermined time. This accounts for the possibility of short activation events that may be caused by a road condition localized to a very small area, such as driving over a railroad crossing or a small patch of sand or gravel. The predetermined time may be selected within the range of from about 2 seconds to about 5 seconds, for example. Other time values may be selected depending upon the minimum speed of ACC operation or other factors.

In a first embodiment not forming a part of the present invention, the ACC function is simply deactivated at the end of the braking operation that caused the activation event lasting for more than the predetermined time duration. Thus, adaptation controller 44 measures the duration of the activation event, and if it is greater than the predetermined time it sends a deactivate signal to headway controller 43. Preferably, headway controller 43 generates a warning message to the driver of the vehicle that ACC is being deactivated, such as a tone, a synthesized voice message, and/or an indicator light.

In a second embodiment, adaptation controller 44 causes a lengthening of the desired headway to improve the maintenance of a safe following distance. Thus, adaptation controller 44 measures the duration of the activation event, and if it is greater than the predetermined time it sends an adjustment signal to headway selector 40. The adjustment signal may comprise a predetermined headway increase having a fixed value or may have a value selected in response to current vehicle speed, for example. The adjustment in the desired headway can take effect immediately at the end of the predetermined time, or, alternatively, at the end of the current drive or braking command.

In a most preferred second embodiment, the adjustment signal provides an amount of headway increase determined in response to desired and actual accelerations corresponding to the activation event. Headway controller 43 monitors vehicle speed at all times and differentiates vehicle speed to monitor acceleration. When generating a drive command or a braking command, headway controller 43 establishes a target acceleration (which is a negative acceleration or a deceleration in the case of a braking command). The value of the target acceleration is provided to adaptation controller 44 for comparison to the actual acceleration achieved (e.g., averaged over the entire activation event, or, alternatively, the peak acceleration achieved during the entire drive command or braking command). The actual acceleration can be provided to adaptation controller 44 from either headway controller 43 or the braking control system.

The desired headway is increased in proportion to the ratio of actual acceleration to desired acceleration as shown in Figure 5. Line 50 plots an increasing amount of added headway as the ratio of actual acceleration to desired acceleration decreases below one. The correlation between the ratio and the added headway is preferably determined in adaptation controller 44 using a lookup table.

In a third embodiment of the modification to the vehicle following function of the ACC, adjustments are made in the headway control algorithm corresponding to the maximum positive acceleration permitted by the algorithm. Thus, if an activation event has occurred (providing an indication that slip might occur), the magnitude of any acceleration command is subjected to a reduced maximum value to reduce the chance that the acceleration will result in slip (e.g., wheel spin). An adjustment in the maximum negative acceleration would not be made, since it is preferable to always allow attempts at achieving large braking force.

A new value for the maximum positive acceleration is provided from adaptation controller 44 to headway controller 43. The new value can provide a predetermined, fixed adjustment value, or can have a value determined in response to the ratio of actual acceleration to desired acceleration, for example. Furthermore, the embodiment that increases desired headway can be used together with the embodiment that reduces the maximum positive acceleration.

In a fourth embodiment, the modification can comprise an adjustment of the controller gain within the closed loop control of headway controller 43. The aggressiveness of the ACC system to maintain a desired headway is determined by the controller gain. A reduction in gain reduces the response at which headway controller 43 attempts to counteract any error between the actual and desired headways. By making the ACC system less aggressive, the chances of causing an activation event during an acceleration are reduced. The gain should only be reduced when the error is negative (i. e., actual headway has become greater than the desired headway). Adaptation controller 44 provides an adjusted gain to headway controller 43 to be used to correct negative errors.

For the modifications of the second, third, and fourth embodiments described above, the modified ACC operation is preferably a temporary measure taken only as long as the potentially slippery road conditions continue to be present. Thus, after initiating a modification, adaptation controller 44 begins to measure the amount of time that transpires since the last activation event. If a predetermined delay is reached (e. g., about 15 minutes), then the normal ACC function is restored. The reversal of the modifications can be made gradually in steps or all at once.

## Claims

1. A vehicle control system comprising:
- an adaptive cruise control (ACC) (20) adapted to control the speed of a vehicle along a path while maintaining a predetermined following headway from another vehicle traveling ahead of said vehicle in said path, said ACC (20) commanding acceleration and braking independently of a driver of said vehicle to maintain said predetermined following headway; and
- a braking control system (10) operable in at least one of a plurality of operating states including anti-lock brake control, traction control and yaw stability control, said at least one operating state including a brake activation event;
- wherein said ACC (20) and said braking control system (10) are adapted to exchange signals therebetween and wherein said ACC (20) is adapted to adopt a modification of the following of said another vehicle in response to said event, **characterized in that** the ACC (20) is adapted to adopt a modified active operation in response to said event.

2. The vehicle control system of claim 1 wherein said ACC (20) is adapted to adopt said modification only if said event lasts for a predetermined time.

3. The vehicle control system of claim 2 wherein said ACC (20) is adapted to adopt said modification not until said predetermined time ends.

4. The vehicle control system of claim 1 wherein said ACC (20) is adapted to adopt said modification not until said ACC command ends.

5. The system of claim 1 wherein said modification is comprised of increasing said predetermined following headway.

6. The system of claim 5 wherein said modification comprises increasing said predetermined following headway by an amount determined in response to a ratio of an actual acceleration achieved during said event and a desired acceleration commanded by said ACC (20).

7. The system of claim 5 wherein said system is adapted to reverse said modification after a predetermined delay during which no further events have occurred.

8. The system of claim 1 wherein said modification is comprised of a reduction of a maximum positive acceleration that can be commanded by said ACC (20).

9. The system of claim 1 wherein said ACC (20) is adapted to determine commands for said acceleration and braking using proportional error control having a predetermined controller gain, and wherein said modification is comprised of reducing said predetermined gain to correct for headway being greater than said predetermined following headway.

10. The system of claim 1 comprising:
- a braking system for applying braking forces to said vehicle, said braking system being adapted to monitor wheel slip and modulating braking during an event when wheel slip is detected;
- an engine system adapted to generate drive forces to accelerate said vehicle;
- a headway selector (40) adapted to select a desired headway between said vehicle and another vehicle traveling ahead of said vehicle;
- a remote sensor system adapted to generate a measured headway between said vehicle and said another vehicle;
- a headway controller (43) adapted to generate drive commands and braking commands in response to a difference between said desired headway and said measured headway in order to maintain said desired headway; and
- an adaptation controller (44) adapted to measure a duration of said event and if said event lasts for a predetermined time to adopt a modification of the following of said another vehicle, wherein said adaptation controller (44) is adapted to adopt said modification not until said predetermined time ends.

11. The vehicle control system of claim 10 wherein said adaptation controller (44) is adapted to adopt said modification not until said braking command ends.

12. The vehicle control system of claim 11 wherein said adaptation controller (44) is coupled to said headway controller (43).

13. The vehicle control system of claim 10 wherein said adaptation controller (44) is coupled to said headway selector (40), and wherein said modification is comprised of increasing said desired headway.

14. The vehicle control system of claim 13 wherein said headway controller (43) is adapted to generate said drive commands and said braking commands according to a target acceleration, and wherein said adaptation controller (44) is adapted to determine an increase of said desired headway in response to a ratio of an actual acceleration achieved during said event and said target acceleration.

15. The vehicle control system of claim 13 wherein said system is adapted to reverse said increase in said desired headway after a predetermined delay during which no further events have occurred.

16. The vehicle control system of claim 10 wherein said adaptation controller (44) is coupled to said headway controller (43), wherein said headway controller (43) is adapted to generate said drive commands according to a target acceleration which is limited to a maximum positive acceleration, and wherein said modification is comprised of reducing said maximum positive acceleration.

17. The vehicle control system of claim 16 wherein said system is adapted to reverse said reduction in said maximum positive acceleration after a predetermined delay during which no further events have occurred.

18. A method for adaptive cruise control of a vehicle, comprising the steps of:
- selecting a desired headway between said vehicle and another vehicle traveling ahead of said vehicle;
- measuring an actual headway between said vehicle and said another vehicle using a remote sensor system;
- generating drive commands and braking commands in response to a difference between said desired headway and said actual headway in order to maintain said desired headway;
- monitoring wheel slip of said vehicle and modulating brakes of said vehicle during an event when wheel slip is detected;
- measuring a duration of said event; and
- if said duration lasts a predetermined time, then adopting a modification of the following of said another vehicle, **characterized in that** a modified active operation is adopted.

19. The method of claim 18 wherein said modification is comprised of the steps of:
- if said event is occurring during a braking command, then waiting for said braking command to end.

20. The method of claim 18 wherein said modification is comprised of the step of increasing said desired headway.

21. The method of claim 20 further comprising the steps of:
- determining a ratio of an actual acceleration achieved during said event and a target acceleration intended for said event;
- selecting a headway increase in response to said ratio; and
- adding said selected headway increase to said desired headway.

22. The method of claim 21 wherein said actual acceleration and said target acceleration are negative.

23. The method of claim 21 further comprising the steps of:
- measuring a predetermined delay since a most recent said event; and
- if said predetermined delay is reached, then removing said headway increase.

24. The method of claim 18 further comprising the steps of:
- limiting said drive commands and said braking commands to achieve a target acceleration no greater than a maximum positive acceleration and a maximum negative acceleration, respectively; and
- reducing said maximum positive acceleration in response to said event.

25. The method of claim 24 further comprising the steps of:
- measuring a predetermined delay since a most recent said event; and
- if said predetermined delay is reached, then restoring said maximum positive acceleration.

## Patentansprüche

1. Fahrzeugsteuerungssystem mit:
- einem Abstandsregeltempomat (Adaptive Cruise Control, ACC) (20), der dazu eingerichtet ist, die Geschwindigkeit eines Fahrzeugs entlang einer Bahn zu steuern, während ein vorbestimmter Verfolgungsabstand zu einem anderen Fahrzeug beibehalten wird, das sich vor dem Fahrzeug auf der Bahn bewegt, wobei der ACC (20) Beschleunigung und Bremsen unabhängig von einem Fahrer des Fahrzeugs derart befiehlt, dass der vorbestimmte Verfolgungsabstand beibehalten wird; und
- einem Bremssteuerungssystem (10), das in mindestens einem einer Mehrzahl von Betriebszuständen umfassend eine Anti-Blockierbremssteuerung, eine Traktionssteuerung und eine Gierstabilitätssteuerung betreibbar ist, wobei der mindestens eine Betriebszustand einen Bremsaktivierungsvorgang beinhaltet;
- wobei der ACC (20) und das Bremssteuerungssystem (10) dazu eingerichtet sind, untereinander Signale auszutauschen und wobei der ACC (20) dazu eingerichtet ist, die Verfolgung des anderen Fahrzeugs in Reaktion auf den Vorgang zu modifizieren,
**dadurch gekennzeichnet, dass** der ACC (20) dazu eingerichtet ist, in Reaktion auf den Vorgang einen modifizierten Aktivbetrieb durchzuführen.

2. Fahrzeugssteuerungssystem nach Anspruch 1, bei dem der ACC (20) dazu eingerichtet ist, die Modifikation nur dann durchzuführen, wenn der Vorgang für eine vorbestimmte Zeit andauert.

3. Fahrzeugssteuerungssystem nach Anspruch 2, bei dem der ACC (20) dazu eingerichtet ist, die Modifikation nicht durchzuführen, bis die vorbestimmte Zeit beendet ist.

4. Fahrzeugssteuerungssystem nach Anspruch 1, bei dem der ACC (20) dazu eingerichtet ist, die Modifikation nicht durchzuführen, bis der ACC Befehl beendet ist.

5. System nach Anspruch 1, wobei die Modifikation eine Erhöhung des vorbestimmten Verfolgungsabstands umfasst.

6. System nach Anspruch 5, bei dem die Modifikation eine Erhöhung des vorbestimmten Verfolgungsabstands um einen Betrag umfasst, der in Reaktion auf ein Verhältnis zwischen einer während des Vorgangs erreichten aktuellen Beschleunigung und einer durch den ACC (20) befohlenen gewünschten Beschleunigung bestimmt wird.

7. System nach Anspruch 5, bei dem das System dazu eingerichtet ist, die Modifikation nach einer vorbestimmten Laufzeit, während der keine weiteren Vorgänge aufgetreten sind, rückgängig zu machen.

8. System nach Anspruch 1, bei dem die Modifikation eine Reduzierung einer maximalen positiven Beschleunigung umfasst, die durch den ACC (20) befohlen werden kann.

9. System nach Anspruch 1, bei dem der ACC (20) dazu eingerichtet ist, Befehle für Beschleunigung und Bremsen unter Verwendung von proportionaler Fehlersteuerung mit einer vorbestimmten Steuerungsverstärkung zu bestimmen, und bei dem die Modifikation das Reduzieren der vorbestimmten Verstärkung umfasst, um Abstände zu korrigieren, die größer sind als der vorbestimmte Verfolgungsabstand.

10. System nach Anspruch 1, mit:
- einem Bremssystem zum Aufbringen von Bremskräften auf das Fahrzeug, wobei das Bremssystem dazu eingerichtet ist, Radschlupf zu überwachen und das Bremsen während eines Vorgangs, bei dem Radschlupf erkannt wird, zu modulieren;
- einem Antriebssystem, das dazu eingerichtet ist, Antriebskräfte zur Beschleunigung des Fahrzeugs zu erzeugen;
- einem Abstandswähler (40), der dazu eingerichtet ist, einen gewünschten Abstand zwischen dem Fahrzeug und einem anderen Fahrzeug, das sich vor dem Fahrzeug bewegt, zu wählen;
- einem Entfernungssensorsystem, das dazu eingerichtet ist, einen gemessenen Abstand zwischen dem Fahrzeug und dem anderen Fahrzeug zu erzeugen;
- einer Abstandssteuerung (43), die dazu eingerichtet ist, Antriebsbefehle und Bremsbefehle in Reaktion auf eine Differenz zwischen dem gewünschten Abstand und dem gemessenen Abstand zu erzeugen, um den gewünschten Abstand beizubehalten; und
- einer Anpassungssteuerung (44), die dazu eingerichtet ist, eine Dauer des Vorgangs zu messen und, wenn der Vorgang für eine vorbestimmte Zeit andauert, die Verfolgung des anderen Fahrzeugs zu modifizieren, wobei die Anpassungssteuerung (44) dazu eingerichtet ist, die Modifikation nicht durchzuführen, bis die vorbestimmte Zeit beendet ist.

11. Fahrzeugsteuerungssystem nach Anspruch 10, bei dem die Anpassungssteuerung (44) dazu eingerichtet ist, die Modifikation nicht durchzuführen, bis der Bremsbefehl endet.

12. Fahrzeugsteuerungssystem nach Anspruch 11, bei dem die Anpassungssteuerung (44) mit der Abstandssteuerung (43) verbunden ist.

13. Fahrzeugsteuerungssystem nach Anspruch 10, bei dem die Anpassungssteuerung (44) mit dem Abstandswähler (40) verbunden ist, und bei der die Modifikation das Erhöhen des gewünschten Abstands umfasst.

14. Fahrzeugsteuerungssystem nach Anspruch 13, bei dem die Abstandssteuerung (43) dazu eingerichtet ist, die Antriebsbefehle und die Bremsbefehle gemäß einer Zielbeschleunigung zu erzeugen, und bei dem die Anpassungssteuerung (44) dazu eingerichtet ist, eine Erhöhung des gewünschten Abstands in Reaktion auf ein Verhältnis zwischen einer während des Vorgangs erreichten aktuellen Beschleunigung und der Zielbeschleunigung zu bestimmen.

15. Fahrzeugsteuerungssystem nach Anspruch 13, bei dem das System dazu eingerichtet ist, die Erhöhung des gewünschten Abstands nach einer vorbestimmten Laufzeit rückgängig zu machen, während der keine weiteren Vorgänge aufgetreten sind.

16. Fahrzeugsteuerungssystem nach Anspruch 10, bei dem die Anpassungssteuerung (44) mit der Abstandssteuerung (43) verbunden ist, wobei die Abstandssteuerung (43) dazu eingerichtet ist, Antriebsbefehle gemäß einer Zielbeschleunigung zu erzeugen, die auf eine maximale positive Beschleunigung begrenzt ist, und wobei die Modifikation eine Reduzierung der maximalen positiven Beschleunigung umfasst.

17. Fahrzeugsteuerungssystem nach Anspruch 16, bei dem das System dazu eingerichtet ist, die Reduzierung der maximalen positiven Beschleunigung nach einer vorbestimmten Laufzeit rückgängig zu machen, während der keine weiteren Vorgänge aufgetreten sind.

18. Verfahren zur angepassten Abstandssteuerung eines Fahrzeugs, mit den Schritten:
- Wählen eines gewünschten Abstands zwischen dem Fahrzeug und einem anderen Fahrzeug, das sich vor dem Fahrzeug bewegt;
- Messen eines aktuellen Abstands zwischen dem Fahrzeug und dem anderen Fahrzeug unter Verwendung eines Entfernungssensorsystems;
- Erzeugen von Antriebsbefehlen und Bremsbefehlen in Reaktion auf eine Differenz zwischen dem gewünschten Abstand und dem aktuellen Abstand, um den gewünschten Abstand beizubehalten;
- Überwachen eines Radschlupfs des Fahrzeugs und Modulieren der Bremsen des Fahrzeugs während eines Vorgangs wenn ein Radschlupf erkannt wird;
- Messen einer Dauer des Vorgangs; und
- wenn die Dauer einer vorbestimmten Zeit entspricht, Durchführen einer Modifikation der Verfolgung des anderen Fahrzeugs,
**dadurch gekennzeichnet, dass** ein modifizierter Aktivbetrieb durchgeführt wird.

19. Verfahren nach Anspruch 18, bei dem die Modifikation die Schritte umfasst:
- wenn der Vorgang während eines Bremsbefehls auftritt, Warten bis der Bremsbefehl beendet ist.

20. Verfahren nach Anspruch 18, bei dem die Modifikation den Schritt des Erhöhens des gewünschten Abstands umfasst.

21. Verfahren nach Anspruch 20, das ferner die Schritte umfasst:
- Bestimmen eines Verhältnisses zwischen einer während des Vorgangs erreichten aktuellen Beschleunigung und einer für den Vorgang beabsichtigten Zielbeschleunigung;
- Wählen einer Abstandserhöhung in Reaktion auf das Verhältnis; und
- Addieren der gewählten Abstandserhöhung zu dem gewünschten Abstand.

22. Verfahren nach Anspruch 21, bei dem die aktuelle Beschleunigung und die Zielbeschleunigung negativ sind.

23. Verfahren nach Anspruch 21, das ferner die Schritte umfasst:
- Messen einer vorbestimmten Laufzeit seit eines letzten Vorgangs; und
- wenn die vorbestimmte Laufzeit erreicht ist, Aufheben der Abstandserhöhung.

24. Verfahren nach Anspruch 18, das ferner die Schritte umfasst:
- Begrenzen der Antriebsbefehle und der Bremsbefehle derart, dass eine Zielbeschleunigung erreicht wird, die nicht größer ist als eine maximale positive Beschleunigung bzw. eine maximale negative Beschleunigung; und
- Reduzieren der maximalen positiven Beschleunigung in Reaktion auf den Vorgang.

25. Verfahren nach Anspruch 24, das ferner die Schritte umfasst:
- Messen einer vorbestimmten Laufzeit seit eines letzten Vorgangs; und
- wenn die vorbestimmte Laufzeit erreicht ist, Wiederherstellen der maximalen positiven Beschleunigung.

## Revendications

1. Système de commande pour véhicule comprenant :
- un régulateur de vitesse adaptatif (ACC) (20) adapté pour commander la vitesse d'un véhicule le long d'un trajet tout en maintenant un espacement de suivi prédéterminé par rapport à un autre véhicule se déplaçant à l'avant dudit véhicule dans ledit trajet, ledit ACC (20) commandant l'accélération et le freinage indépendamment d'un conducteur dudit véhicule pour maintenir ledit espacement de suivi prédéterminé ; et
- un système de commande de freinage (10) pouvant être actionné dans au moins l'un parmi une pluralité d'états de fonctionnement comprenant une commande de freinage antiblocage, une commande d'antipatinage à l'accélération et une commande de stabilité en lacet, ledit au moins un état de fonctionnement comprenant un événement d'activation des freins ;
dans lequel ledit ACC (20) et ledit système de commande de freinage (10) sont adaptés pour échanger des signaux entre eux et dans lequel ledit ACC (20) est adapté pour adopter une modification du suivi dudit autre véhicule en réponse audit événement, **caractérisé en ce que** l'ACC (20) est adapté pour adopter un actionnement actif modifié en réponse audit événement.

2. Système de commande pour véhicule selon la revendication 1, dans lequel ledit ACC (20) est adapté pour adopter ladite modification seulement si ledit événement dure pendant un temps prédéterminé.

3. Système de commande pour véhicule selon la revendication 2, dans lequel ledit ACC (20) est adapté pour adopter ladite modification pas avant que ledit temps prédéterminé se termine.

4. Système de commande pour véhicule selon la revendication 1, dans lequel ledit ACC (20) est adapté pour adopter ladite modification pas avant que la commande ACC se termine.

5. Système selon la revendication 1, dans lequel ladite modification est composée de l'augmentation dudit espacement de suivi prédéterminé.

6. Système selon la revendication 5, dans lequel ladite modification comprend l'augmentation dudit espacement de suivi prédéterminé d'une quantité déterminée en réponse à un rapport d'une accélération réelle obtenue pendant ledit événement et d'une accélération souhaitée commandée par ledit ACC (20).

7. Système selon la revendication 5, dans lequel ledit système est adapté pour inverser ladite modification après un retard prédéterminé pendant lequel plus aucun événement ne s'est produit.

8. Système selon la revendication 1, dans lequel ladite modification est composée d'une réduction d'une accélération positive maximale qui peut être commandée par ledit ACC (20).

9. Système selon la revendication 1, dans lequel ledit ACC (20) est adapté pour déterminer des commandes pour ladite accélération et ledit freinage en utilisant une commande d'erreur proportionnelle présentant un gain variable prédéterminé, et dans lequel ladite modification est composée de la réduction dudit gain prédéterminé pour corriger l'espacement entre véhicules étant supérieur audit espacement de suivi prédéterminé.

10. Système selon la revendication 1, comprenant :
- un système de freinage destiné à appliquer des forces de freinage audit véhicule, ledit système de freinage étant adapté pour contrôler le patinage et moduler le freinage pendant un événement lorsque le patinage est détecté ;
- un système de moteur adapté pour générer des forces d'entraînement pour accélérer ledit véhicule ;
- un sélecteur d'espacement entre véhicules (40) adapté pour sélectionner un espacement entre véhicules souhaité entre ledit véhicule et un autre véhicule se déplaçant à l'avant dudit véhicule ;
- un système de télécapteur adapté pour générer un espacement mesuré entre ledit véhicule et ledit autre véhicule ;
- un contrôleur d'espacement entre véhicules (43) adapté pour générer des commandes d'entraînement et des commandes de freinage en réponse à une différence entre ledit espacement entre véhicules souhaité et ledit espacement entre véhicules mesuré afin de maintenir ledit espacement entre véhicules souhaité ; et
- un contrôleur d'adaptation (44) adapté pour mesurer une durée dudit événement et si ledit événement dure pendant un temps prédéterminé pour adopter une modification du suivi dudit autre véhicule, dans lequel ledit contrôleur d'adaptation (44) est adapté pour adopter ladite modification pas avant que le temps prédéterminé se termine.

11. Système de commande pour véhicule selon la revendication 10, dans lequel ledit contrôleur d'adaptation (44) est adapté pour adopter ladite modification pas avant que ladite commande de freinage se termine.

12. Système de commande pour véhicule selon la revendication 11, dans lequel ledit contrôleur d'adaptation (44) est couplé audit contrôleur d'espacement entre véhicules (43).

13. Système de commande pour véhicule selon la revendication 10, dans lequel ledit contrôleur d'adaptation (44) est couplé audit sélecteur d'espacement entre véhicules (40), et dans lequel ladite modification est composée de l'augmentation dudit espacement entre véhicules souhaité.

14. Système de commande pour véhicule selon la revendication 13, dans lequel ledit contrôleur d'espacement entre véhicules (43) est adapté pour générer lesdites commandes d'entraînement et lesdites commandes de freinage conformément à une accélération cible, et dans lequel ledit contrôleur d'adaptation (44) est adapté pour déterminer une augmentation dudit espacement entre véhicules souhaité en réponse à un rapport d'une accélération réelle atteinte pendant ledit événement et de ladite accélération cible.

15. Système de commande pour véhicule selon la revendication 13, dans lequel ledit système est adapté pour inverser ladite augmentation dudit espace entre véhicules souhaité après un retard prédéterminé pendant lequel plus aucun événement ne se produit.

16. Système de commande pour véhicule selon la revendication 10, dans lequel ledit contrôleur d'adaptation (44) est couplé audit contrôleur d'espacement entre véhicules (43), dans lequel ledit contrôleur d'espacement entre véhicules (43) est adapté pour générer lesdites commandes d'entraînement conformément à une accélération cible qui est limitée à une accélération positive maximale, et dans lequel ladite modification est composée de la réduction de ladite accélération positive maximale.

17. Système de commande pour véhicule selon la revendication 16, dans lequel ledit système est adapté pour inverser ladite réduction de ladite accélération positive maximale après un retard prédéterminé pendant lequel plus aucun événement ne se produit.

18. Procédé pour un régulateur de vitesse adaptatif d'un véhicule, comprenant les étapes consistant à :
- sélectionner un espacement souhaité entre ledit véhicule et un autre véhicule se déplaçant à l'avant dudit véhicule ;
- mesurer un espacement réel entre ledit véhicule et ledit autre véhicule en utilisant un système de télécapteur ;
- générer des commandes d'entraînement et des commandes de freinage en réponse à une différence entre ledit espacement entre véhicules souhaité et ledit espacement entre véhicules réel afin de maintenir ledit espacement entre véhicules souhaité ;
- contrôler le patinage dudit véhicule et moduler le freinage dudit véhicule pendant un événement lorsque le patinage est détecté ;
- mesurer une durée dudit événement ; et
- si ladite durée se prolonge pendant un temps prédéterminé, alors adopter une modification du suivi dudit autre véhicule,
**caractérisé en ce qu'**un actionnement actif modifié est adopté.

19. Procédé selon la revendication 18, dans lequel ladite modification est composée de l'étape consistant à :
si ledit événement se produit pendant une commande de freinage, alors attendre que ladite commande de freinage se termine.

20. Procédé selon la revendication 18, dans lequel ladite modification est composée de l'étape consistant à augmenter ledit espacement entre véhicules souhaité.

21. Procédé selon la revendication 20, comprenant en outre les étapes consistant à :
- déterminer un rapport d'une accélération réelle obtenue pendant ledit événement et d'une accélération cible intentionnelle pour ledit événement ;
- sélectionner une augmentation de l'espacement entre véhicules en réponse audit rapport ; et
- ajouter ladite d'espacement entre véhicules sélectionnée audit espacement entre véhicules souhaités.

22. Procédé selon la revendication 21, dans lequel ladite accélération réelle et ladite accélération cible sont négatives.

23. Procédé selon la revendication 21, comprenant en outre les étapes consistant à :
- mesurer un retard prédéterminé depuis ledit événement le plus récent ; et
- si ledit retard prédéterminé est atteint, alors supprimer ladite augmentation d'espacement entre véhicules.

24. Procédé selon la revendication 18, comprenant en outre les étapes consistant à :
- limiter lesdites commandes d'entraînement et lesdites commandes de freinage pour atteindre une accélération cible n'étant pas supérieure à une accélération positive maximale et à une accélération négative maximale, respectivement ; et
- réduire ladite accélération positive maximale en réponse audit événement.

25. Procédé selon la revendication 24, comprenant en outre les étapes consistant à :
- mesurer un retard prédéterminé depuis un dit événement le plus récent ; et
- si ledit retard prédéterminé est atteint, alors restaurer ladite accélération positive maximale.
